# EUROPÄISCHE PATENTSCHRIFT

(11) **EP 1 985 953 B1**
(45) Veröffentlichungstag und Bekanntmachung des Hinweises auf die Patenterteilung: **05.09.2018**
(21) Anmeldenummer: 08005238.4
(22) Anmeldetag: 20.03.2008
(51) Int. Cl.: F02M 26/23, F02M 26/24, F02M 26/32, F28D 7/00, F28D 7/16, F28D 9/00, F28F 3/02, F28F 13/14

(54) **Wärmetauscher, insbesondere zur Abgaskühlung, Verfahren zum Betreiben eines solchen Wärmetauschers und System mit einem Abgaskühler**
Heat exchanger, in particular exhaust gas cooler, method for operating such a heat exchanger, system with an exhaust gas cooler
Echangeur thermique, en particulier destiné au refroidissement des gaz d'échappement, procédé d'utilisation d'un tel échangeur et système comprenant un refroidisseur EGR

(30) Priorität: 26.04.2007 DE 102007020103
(43) Veröffentlichungstag der Anmeldung: 29.10.2008
(73) Patentinhaber: MAHLE Behr GmbH & Co. KG, 70469 Stuttgart (DE)
(72) Erfinder: Fetzer, Tobias, 73760 Ostfildern (DE); Pantow, Eberhard, 71364 Winnenden (DE); Geskes, Peter, 73760 Ostfildern (DE); Pfister, Florian, 71706 Markgröningen (DE); Lutz, Rainer, 71711 Steinheim (DE); Ruckwied, Jens, 70176 Stuttgart (DE); Irmler, Klaus, 72072 Tübingen (DE); Schmidt, Michael, 74321 Bietigheim-Bissingen (DE)
(74) Vertreter: Grauel, Andreas

(56) Entgegenhaltungen:
- WO-A1-2005/116437
- DE-A1- 10 112 257
- DE-A1- 10 312 788
- DE-C1- 4 414 429
- US-A1- 2002 014 326
- US-A1- 2005 188 965
- US-A1- 2005 274 501
- US-B1- 6 904 898
- US-B1- 6 978 772

## Beschreibung

Die vorliegende Erfindung betrifft Wärmetauscher, insbesondere zur Abgaskühlung einer Brennkraftmaschine eines Kraftfahrzeugs aufweisend einen ersten Teilwämetauscher mit zumindest einem ersten Strömungskanal zur Durchströmung mit einem zu kühlenden Medium und zumindest einen dritten Strömungskanal zur Durchströmung mit einem ersten Kühlmedium, zumindest einen zweiten Teilwärmetauscher mit zumindest einem zweiten Strömungskanal zur Durchströmung mit dem zu kühlenden Medium und zumindest einen vierten Strömungskanal zur Durchströmung mit einem zweiten Kühlmedium, wobei der zumindest erste Strömungskanal und der zumindest zweite Strömungskanal in Strömungsverbindung stehen und der zumindest eine erste Strömungskanal und der zumindest eine zweite Strömungskanal zumindest eine erste spezifische Wärmeübertragungsfläche und zumindest eine zweite spezifische Wärmeübertragungsfläche aufweisen.
Die Erfindung betrifft darüber hinaus Verfahren zum Betreiben des Wärmetauschers nach einem der Ansprüche 1 bis 18. Ferner betrifft die vorliegende Erfindung ein System mit zumindest einem Wärmetauscher nach einem der Ansprüche 1 bis 18. Aufgrund von immer strenger werdenden Emissionsvorschriften wird ein Teil des in einem Verbrennungsmotor erzeugten Abgases gekühlt und anschließend dem Motor wieder zugeführt.
Aus der DE 103 28 746 A1 ist ein mehrstufiger Wärmetauscher bekannt. Der Wärmetauscher weist turbulenzerzeugende Formelemente in Form von Rippen, Stegen, Noppen oder Einprägungen auf.
In der DE 10 2005 029 322 A1 ist ein System mit einer zweistufigen Abgaskühlung offenbart. Der Abgaskühler ist auf der Niederdruckseite eines Turboladers angeordnet. Hierbei tritt insbesondere säurehaltiges Kondensat auf, das zur Korrosion des Abgaskühlers führt.
Aus der DE 10 2005 042 396 A1 ist ein zweistufiger Abgaskühler bekannt, wobei die eine Stufe des Abgaskühlers luftgekühlt und die andere Stufe des Abgaskühlers mittels eines flüssigen Kühlmittels gekühlt ist.
Aus der noch unveröffentlichten DE 10 2007 005 723.9 ist ein zweistufiger Abgaskühler bekannt mit einem Hochtemperaturkreislauf und einem Niedertemperaturkreislauf. Der Hochtemperaturkreislauf und der Niedertemperaturkreislauf sind dabei durch eine Trennwand voneinander getrennt.
Es ist Aufgabe der vorliegenden Erfindung einen Wärmetauscher der eingangs genannten Art bezüglich Bauraum und Kosten zu optimieren. Insbesondere besteht die Aufgabe darin, die Verschmutzung des Wärmetauschers, insbesondere durch Abgas und eine damit verbundene Leistungsabnahme des Wärmetauschers im Dauerbetrieb zu verhindern.
Die Aufgabe wird durch die Merkmale des Anspruchs 1 gelöst.

Es wird ein Wärmetauscher zur Abgaskühlung einer Brennkraftmaschine eines Kraftfahrzeugs vorgeschlagen. Der Wärmetauscher weist einen ersten Teilwärmetauscher mit zumindest einem ersten Strömungskanal zur Durchströmung mit einem zu kühlenden Medium, insbesondere Abgas, und zumindest einen dritten Strömungskanal zur Durchströmung mit einem ersten Kühlmedium, insbesondere mit einer wasserhaltigen Kühlflüssigkeit oder Luft, auf.
Ferner weist der Wärmetauscher zumindest einen zweiten Teilwärmetauscher mit zumindest einem zweiten Strömungskanal zur Durchströmung mit dem zu kühlenden Medium, insbesondere dem Abgas, und zumindest einen vierten Strömungskanal zur Durchströmung mit einem zweiten Kühlmedium, insbesondere einer wasserhaltigen Kühlflüssigkeit oder Luft auf.
Der zumindest erste Strömungskanal und der zumindest zweite Strömungskanal stehen in Strömungsverbindung, wobei der zumindest eine erste Strömungskanal und der zumindest eine zweite Strömungskanal zumindest eine erste spezifische Wärmeübertragungsfläche und zumindest eine zweite spezifische Wärmeübertragungsfläche aufweisen.

Die zweite spezifischen Wärmeübertragungsfläche dividiert durch die erste spezifische Wärmeübertragungsfläche ergibt einen Quotienten ψ, wobei der zumindest eine erste Strömungskanal einen größeren Quotienten ψ aufweist als der zweite Strömungskanal.

Auf diese Weise wird besonders vorteilhaft erreicht, dass eine wärmeübertragende Fläche, die mit dem Abgas in Berührung kommt, im ersten Teilwärmetauscher ausreichend groß ist, so dass sich die Ablagerungen des Abgases an dieser Fläche absetzen können, ohne dass die Leistung im Dauerbetrieb wesentlich abnimmt und gleichzeitig die wärmeübertragende Fläche im zweiten Teilwärmetauscher so ausgebildet ist, dass die Ablagerungen des Abgases besonders vorteilhaft durch auskondensierendes Wasser aus dem Abgaswärmetauscher entfernt werden ohne dass es zu Korrosion im zweiten Teilwärmetauscher kommt, die zur Funktionsunfähigkeit des Wärmetauschers führt. Gemäß der Erfindung nimmt der Quotient ψ des zumindest einen ersten Strömungskanals Werte von 1,0 bis 2,5 und/oder der Quotient des zumindest einen zweiten Strömungskanals Werte von 0 bis 1,5 an.

In einer vorteilhaften Weiterbildung der Erfindung bilden der erste Strömungskanal und der zweite Strömungskanal eine Baueinheit. Auf diese Weise weist der Wärmetauscher besonders vorteilhaft einen durchgängigen Strömungskanal für den ersten und zweiten Teilwärmetauscher auf. Der Wärmetauscher ist dadurch besonders kompakt und kostengünstig, sowie einfacher montierbar.
In einer vorteilhaften Weiterbildung der Erfindung weist das erste Kühlmedium eine höhere Temperatur auf als das zweite Kühlmedium. Auf diese Weise werden besonders vorteilhaft ein Hochtemperaturkreislauf und ein Niedertemperaturkreislauf gebildet. Der zumindest eine erste Strömungskanal ist rohrartig ausgebildet und weist eine erste Rohrinnenwandfläche auf, die die erste Wärmeübertragungsfläche bildet. Ebenso ist der zumindest eine zweite Strömungskanal rohrartig ausgebildet und weist eine zweite Rohrinnenwandfläche auf, die die erste Wärmeübertragungsfläche bildet. Erfindungsgemäß weist der zumindest eine erste Strömungskanal erste Turbulenzelemente auf. Der zumindest eine zweite Strömungskanal weist zweite Turbulenzelemente auf. Auf diese Weise kann die Wärmeübertragungsleistung zwischen zu kühlendem Abgas und Kühlmedium besonders vorteilhaft erhöht werden.
In einer vorteilhaften Weiterbildung der Erfindung weisen die ersten Turbulenzelemente eine erste Turbulenzelementhöhe und/oder die zweiten Turbulenzelemente eine zweite Turbulenzelementhöhe auf.

In einer vorteilhaften Weiterbildung der Erfindung sind die ersten Turbulenzelemente als erste Dimpel oder erste Turbulenzbleche mit ersten Rippensegmenten ausgebildet. Die zweiten Turbulenzelemente sind als zweite Dimpel oder zweite Turbulenzbleche mit zweiten Rippensegmenten ausgebildet. Auf diese Weise kann das Turbulenzelement besonders einfach durch Prägen oder Pressen hergestellt werden und auf die Erfordernisse im ersten und zweiten Teilwärmetauscher - insbesondere große Flächen zur Aufnahme der Ablagerungen des Abgases und eine Flächengestaltung im zweiten Teilwärmetauscher, die ein Auskondensieren von Wasser und ein Auswaschen der Ablagerungen bewirkt, abgestimmt.

In einer vorteilhaften Weiterbildung der Erfindung weisen die ersten Turbulenzbleche und/oder die zweiten Turbulenzbleche die zweite Wärmeübertragungsfläche auf. Insbesondere werden die Bereiche der zweiten Wärmeübertragungsfläche besonders vorteilhaft von beiden Seiten mit Abgas beaufschlagt. Die ersten Wärmetauscherflächen werden an einer Wandseite von Abgas beaufschlagt und an der entgegengesetzten Seite von Kühlmedium beaufschlagt.

In einer vorteilhaften Weiterbildung der Erfindung weisen die ersten Turbulenzelemente eine erste Turbulenzelementhöhe und/oder die zweiten Turbulenzelemente eine zweite Turbulenzelementhöhe auf.

In einer vorteilhaften Weiterbildung der Erfindung ist die erste Turbulenzelementhöhe größer als die zweite Turbulenzelementhöhe.

In einer vorteilhaften Weiterbildung der Erfindung ist eine erste Turbulenzelementdichte durch die Anzahl der ersten Turbulenzelemente bezogen auf eine erste Länge des ersten Strömungskanals und/oder eine zweite Turbulenzelementdichte durch die Anzahl der zweiten Turbulenzelemente bezogen auf eine zweite Länge des zweiten Strömungskanals definiert.

In einer vorteilhaften Weiterbildung der Erfindung ist eine erste Turbulenzelementdicke größer als eine zweite Turbulenzelementdicke. Auf diese Weise wird ein besonders guter Wärmeübergang durch die Materialanhäufung gewährleistet.

In einer vorteilhaften Weiterbildung der Erfindung ist eine erste Turbulenzelementdicke kleiner als eine zweite Turbulenzelementdicke. Auf diese Weise wird eine besonders gute Korrosionsresistenz gewährleistet.

In einer vorteilhaften Weiterbildung der Erfindung ist der Wärmetauscher ein U-Flow-Wärmetauscher. Dabei strömt das Abgas besonders vorteilhaft an einer Seite in den Wärmetauscher ein, durchströmt diesen, wird um 180° umgelenkt und strömt in entgegengesetzter Richtung zurück.

In einer vorteilhaften Weiterbildung der Erfindung ist der Wärmetauscher ein I-Flow-Wärmetauscher. Das Abgas strömt an einer Seite in den Wärmetauscher ein, durchströmt diesen und strömt an der entgegengesetzten anderen Seite wieder aus dem Wärmetauscher.

In einer vorteilhaften Weiterbildung der Erfindung weist der Wärmetauscher einen dritten Teilwärmetauscher zum Abbau von Thermospannungen auf. Aufgrund des relativ kurzen Wärmetauschers entstehen aufgrund der hohen Abgastemperaturen keine großen Biegespannungen.

In einer vorteilhaften Weiterbildung der Erfindung weist der dritte Teilwärmetauscher 1/8 bis 1/4 einer Wärmetauscherlänge des Wärmetauschers auf.

In einer vorteilhaften Weiterbildung der Erfindung ist der erste Teilwärmetauscher zwischen dem zweiten Teilwärmetauscher und dem dritten Teilwärmetauscher angeordnet.

In einer vorteilhaften Weiterbildung der Erfindung bilden der erste Teilwärmetauscher und/oder der zweite Teilwärmetauscher und/oder dritte Teilwärmetauscher eine Baueinheit. Auf diese Weise können der erste Teilwärmetauscher und/oder der zweite Teilwärmetauscher und/oder der dritte Teilwärmetauscher besonderes vorteilhaft mittels Flanschen verbunden oder mittels eines einzigen Gehäuses zu einer Baueinheit verbunden werden. Auf dieser Weise kann die Endmontage in ein Fahrzeug besonders schnell und einfach erfolgen.

In einer vorteilhaften Weiterbildung der Erfindung strömen in dem ersten Teilwärmetauscher und/oder in dem zweiten Teilwärmetauscher und/oder in dem dritten Teilwärmetauscher das zu kühlende Medium und das Kühlmedium im Gleichstrom oder im Gegenstrom.

Ferner wird ein Verfahren zum Betreiben des Wärmetauschers nach einem der Ansprüche 1 bis 22 vorgeschlagen. Das zu kühlende Medium, insbesondere Abgas, kondensiert beim Durchströmen des zweiten Wärmetauscherteils zumindest Wasser aus dem zu kühlenden Medium, insbesondere dem Abgas, aus zum Reinigen des zweiten Strömungskanals von Ablagerung des zu kühlenden Mediums. Auf diese Weise werden Ablagerungen aus dem zweiten Teilwärmetauscher besonderes vorteilhaft abgeführt und die Leistung auf Dauer stabil gehalten.

In einer vorteilhaften Weiterbildung der Erfindung kondensiert das zu kühlende Medium im Wesentlichen bei einer Temperatur des zweiten Kühlmediums von kleiner als 40°C zumindest Wasser aus.

Ferner wird ein System mit zumindest einem Wärmetauscher nach einem der Ansprüche 1 bis 22 vorgeschlagen. Dabei ist zumindest ein zweiter Wärmetauscher zur Kühlung eines Verbrennungsmotors eines Kraftfahrzeugs und zumindest ein dritter Wärmetauscher zur Kühlung des zweiten Kühlmediums vorgesehen.

In einer vorteilhaften Weiterbildung der Erfindung ist zumindest ein vierter Wärmetauscher zur Kühlung des ersten Kühlmediums vorgesehen.

In einer vorteilhaften Weiterbildung der Erfindung ist in einer Luftströmungsrichtung gesehen zunächst der dritte Wärmetauscher und anschließend der zweite Wärmetauscher angeordnet.

In einer vorteilhaften Weiterbildung der Erfindung ist in Luftströmungsrichtung gesehen nach dem zweiten Wärmetauscher der vierte Wärmetauscher angeordnet.

In einer vorteilhaften Weiterbildung der Erfindung ist der vierte Wärmetauscher benachbart zu dem zweiten Wärmetauscher und/oder im Wesentlichen auf derselben Höhe in Luftströmungsrichtung gesehen wie der zweite Wärmetauscher angeordnet.

In einer vorteilhaften Weiterbildung der Erfindung sind der zweite Wärmetauscher und der vierte Wärmetauscher identisch.

In einer vorteilhaften Weiterbildung der Erfindung ist zustromseitig des ersten Wärmetauschers ein erstes Regelorgan zur Regelung des Massenstroms des zu kühlenden Mediums und/oder zum Bypassen von zu kühlendem Medium um zumindest einen Teilwärmetauscher angeordnet.

In einer vorteilhaften Weiterbildung der Erfindung ist abstromseitig des ersten Teilwärmetauschers und zustromseitig des zweiten Teilwärmetauschers ein zweites Regelorgan zur Regelung des Massenstroms des zu kühlenden Mediums und/oder zum Bypassen von zu kühlendem Medium um zumindest einen Teilwärmetauscher angeordnet.

In einer vorteilhaften Weiterbildung der Erfindung ist die Wärmeübertragungsfläche auf der Kühlmediumsseite an die dort herrschenden Strömungsbedingungen angepasst. Dort soll die Strömung im turbulenten Fall vorliegen. Die turbulente Strömung wird besonders vorteilhaft durch Anpassung des Strömungsquerschnitts und/oder mittels turbulenzerzeugender Elemente in diesem Bereich erzeugt. Besonders vorteilhaft sind die turbulenzerzeugenden Elemente kühlmittelseitige Rippen und/oder Winglets.

In einer vorteilhaften Weiterbildung der Erfindung sind die turbulenzerzeugenden Mittel insbesondere in der zweiten Stufe, in der Niedertemperaturkühlerstufe realisiert. Auf diese Weise ist der Kühlmittelmassenstrom des Niedertemperaturkühlers deutlich geringer als der des Hochtemperaturkühlers

Weitere vorteilhafte Ausgestaltungen der Erfindung ergeben sich aus den Unteransprüchen und aus der Zeichnung. Die Gegenstände der Unteransprüche beziehen sich sowohl auf den erfindungsgemäßen Wärmetauscher, als auch auf das erfindungsgemäße System und das Verfahren zum Betreiben des erfindungsgemäßen Wärmetauschers.

Ausführungsbeispiele der Erfindung sind in der Zeichnung dargestellt und werden im Folgenden näher erläutert, wobei eine Beschränkung der Erfindung hierdurch nicht erfolgen soll. Es zeigen
Figur 1: einen zweistufigen Abgaskühler;
Figur 2a: einen Ausschnitt des ersten bzw. zweiten Strömungskanals mit einer ersten Wärmeübertragungsfläche;
Figur 2b: einen Ausschnitt des ersten bzw. zweiten Strömungskanals mit einer zweiten Wärmeübertragungsfläche;
Figur 3a: ein Diagramm des Faktors γ aufgetragen über dem Faktor ψ für den ersten Teilwärmetauscher;
Figur 3b: ein Diagramm des Faktors γ aufgetragen über dem Faktor ψ für den zweiten Teilwärmetauscher;
Figur 3c: ein Diagramm des Faktors γ aufgetragen über der Tempertur des zweiten Kühlmediums für den zweiten Teilwärmetauscher;
Figur 4a: eine Schnittdarstellung eines zweistufigen Abgaskühlers in Scheibenbauweise mit durchgängigen Scheiben;
Figur 4b: eine Draufsicht einer anderen Ausführungsform eines zweistufigen Abgaskühlers in Scheibenbauweise mit durchgängigen Scheiben;
Figur 5: durchgängige Strömungskanäle mit zwei gewellten Turbulenzblechen;
Figur 6: eine Schnittdarstellung eines durchgängigen Strömungskanals mit einem eingeschobenen Turbulenzblech im ersten Teilwärmetauscher und mit Dimpeln im Form von Winglets im zweiten Teilwärmetauscher;
Figur 7a,b,c,d: weitere Ausführungsformen von turbulenzerzeugenden Blechen;
Figur 8: einen zweistufigen Abgaswärmetauscher im U-Flow ;
Figur 9: ein System mit einem zweistufigen Abgaskühler;
Figur 10: ein Schaubild mit den Vorteilen der zweistufigen Abgaskühlung;
Figur 11: ein weiteres System mit einem ersten Regelorgan zustromseitig des ersten Teilwärmetauschers und einem zweiten Regelorgan abstromseitig des ersten Teilwärmetauschers und zustromseitig des zweiten Teilwärmetauschers;
Figur 12: einen dreistufigen Abgaskühler;
Figur 13: ein erstes System mit einem dreistufigen Abgaskühler;
Figur 14: ein zweites System mit einem dreistufigen Abgaskühler;
Figur 15: ein drittes System mit einem dreistufigen Abgaskühler;
Figur 16: ein viertes System mit einem dreistufigen Abgaskühler.

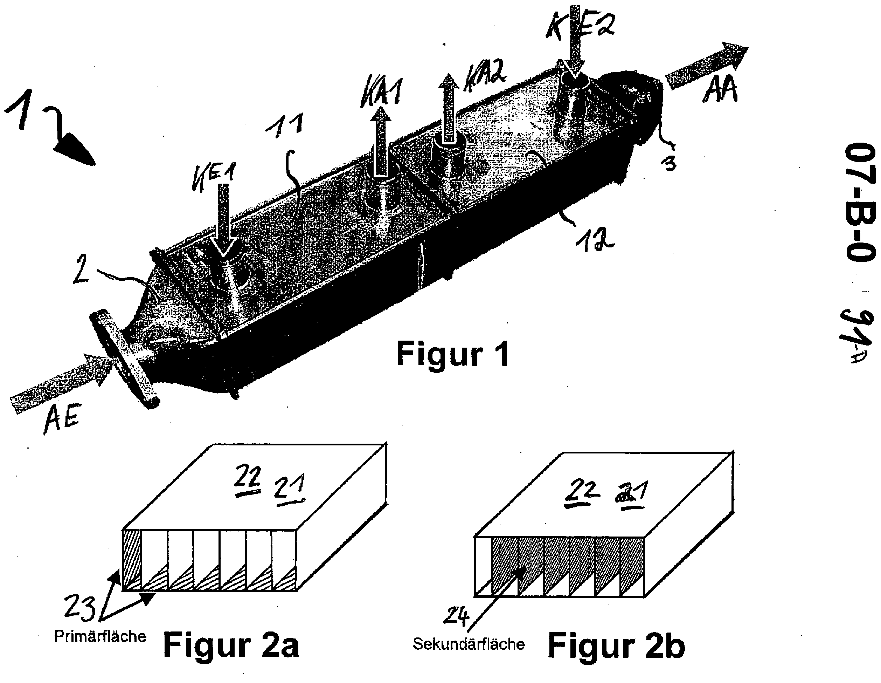

**Figur 1** zeigt einen zweistufigen Abgaskühler 1. Der Abgaskühler weist eine ersten ersten Teilwärmetauscher 11 und einen zweiten Teilwärmetauscher 12 auf.

Der Teilwärmetauscher 11 weist ein Gehäuse aus Edelstahl oder Aluminium oder aus Kunststoff auf. Über einer Kühlmediumeintritt KE1 strömt erstes Kühlmedium in den Teilwärmetauscher 11 und kühlt das über den Eintrittsdiffusor einströmende Abgas AE in einer ersten Stufe ab. Das Kühlmedium tritt über den Austritt KA1 aus. Das bereits abgekühlte Abgas strömt weiter in den zweiten Teilwärmetauscher 12 und wird weiter abgekühlt und verlässt diesen anschließend über den Austrittsdiffusor 3 Richtung AA. Das zweite Kühlmedium, bsp Wasser oder Luft, strömt über den weiten Eintritt EA2 in den Teilwärmetauscher 12 ein und über den Austritt EA wieder aus. Der zweite Teilwärmetauscher 12 weist ein Gehäuse aus Edelstahl oder Aluminium oder aus Kunststoff auf.

**Figur 2a** zeigt einen Ausschnitt des ersten bzw. zweiten Strömungskanals 21, 22 mit einer ersten Wärmeübertragungsfläche 23.

**Figur 2b****:** zeigt einen Ausschnitt des ersten bzw. zweiten Strömungskanals 21, 22 mit einer zweiten Wärmeübertragungsfläche 24.

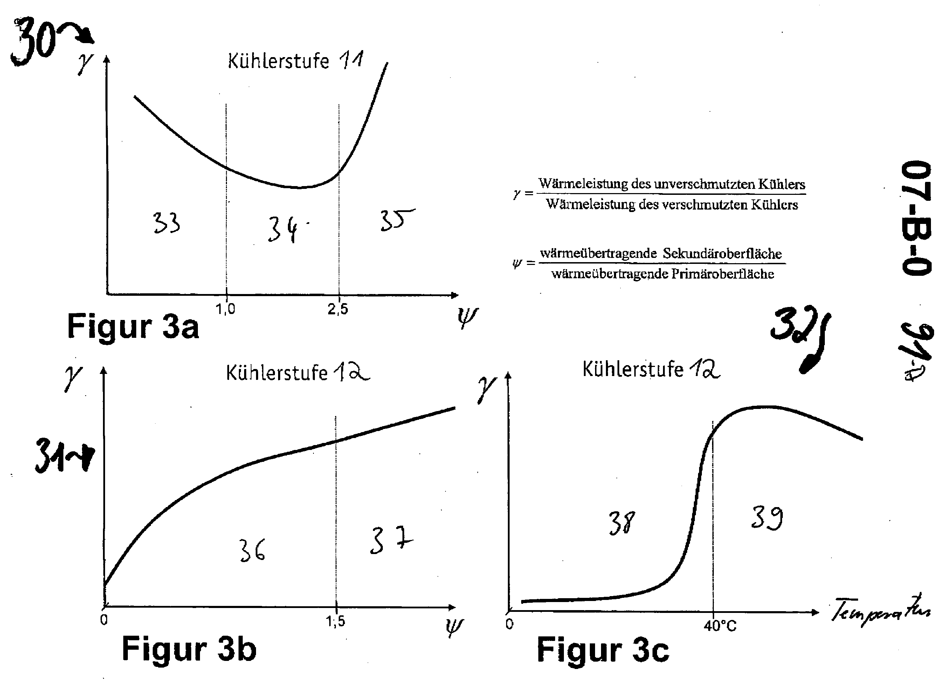

Die **Figuren 3a, 3b** und **3c** stellen drei Diagramme dar:
Der Faktor γ ist ein Quotient der gebildet wird durch die Division der Wärmeleistung des unverschmutzten Kühlers, der keine Ablagerungen aufweist durch die Wärmeleistung des verschmutzten Kühlers, der Ablagerungen aufweist.

Der Faktor ψ ist ein Quotient, der gebildet wird durch die Division der wärmeübertragenden Sekundäroberfläche 24 dividiert durch die wärmeübertragende Primäroberfläche 23.

Figur 3a zeigt ein Diagramm des Faktors γ aufgetragen über dem Faktor ψ für den ersten Teilwärmetauscher 11. Im Bereich 33 von ψ<1 ist zu wenig Sekundärfläche 24 vorhanden und die Wärmeübertragungsleistung des Kühlers ist zu gering. Im Bereich 35 von ψ>2,5 erfolgt eine Verblockung und ein Zusetzen des Abgaskühlers. Der optimale Bereich 34 (1≤ψ≤2,5) gewährleistet hohe Leistung bei geringer Zusetzung des Abgaskühlers.

Figur 3b zeigt ein Diagramm des Faktors γ aufgetragen über dem Faktor ψ für den zweiten Teilwärmetauscher 12. Im Bereich 36 (0≤ψ≤1,5) ist die Leistung optimal und die Ablagerungen werden gut ausgewaschen. Bei einem Wert ψ>1,5 Bereich 37 erfolgt ein Zusetzen der zweiten Strömungskanäle 22.

Figur 3c zeigt ein Diagramm des Faktors γ aufgetragen über der Temperatur des zweiten Kühlmediums für den zweiten Teilwärmetauscher. Bei Temperatur ≤40°C, so haben Versuche gezeigt, werden Ablagerungen aufgrund von auskondensierendem Wasser besonders vorteilhaft ausgewaschen.

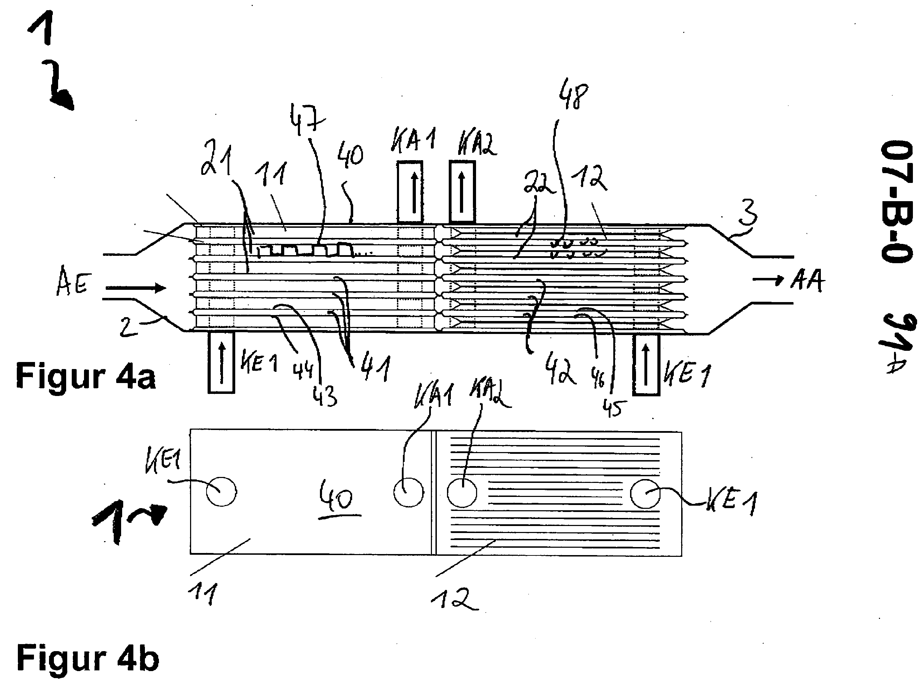

**Figur 4a** zeigt eine Schnittdarstellung eines zweistufigen Abgaskühlers 1 in Scheibenbauweise mit durchgängigen Scheiben 41,42,43,44. Gleiche Merkmale sind mit den gleichen Bezugszeichen versehen wie in den vorherigen Figuren.

Die ersten Strömungskanäle 21, die zweiten Strömungskanäle 22, die dritten Strömungskanäle 41 und die vierten Strömungskanäle 42 werden durch übereinander gestapelte Oberscheiben mit den Abschnitten 43 und 45 und Unterscheiben mit den Abschnitten 44 und 46 gebildet. Die Platten sind im dargestellten Ausführungsbeispiel durchgehend ausgebildet, können aber auch miteinander verbunden sein durch Stoff- oder Formschluss. In den ersten Strömungskanälen 21 sind erste Turbulenzelemente 47 in Form von Turbulenzblechen oder Dimpeln angeordnet. In den zweiten Strömungskanälen 22 sind zweite Turbulenzelemente 48 in Form von Turbulenzblechen oder Dimpeln angeordnet. Diese steigern die Wärmeübertragungsleistung.

Die Platten sind aus einem Metall wie Edelstahl oder Aluminium oder einem anderen Metall ausgebildet. Die Platten werden von einem Gehäuse 40 umschlossen.

**Figur 4b** zeigt eine Draufsicht einer anderen Ausführungsform eines zweistufigen Abgaskühlers 1 in Scheibenbauweise mit durchgängigen Scheiben. Gleiche Merkmale sind mit den gleichen Bezugszeichen versehen wie in den vorherigen Figuren.

Im Gegensatz zu Figur 4a sind bei Figur 4b die Kühlmedienein- und auslässe KE1 und 2 sowie KA1 und 2 auf derselben Seite. Bereich 11 weist glatte Scheiben auf, die mit den Rippenelementen der ersten Turbulenzbleche bzw. verlötet sind. Bereich 12 zeigt eine Wellenstruktur. Die Wellenhöhe entspricht der halben Kanalhöhe. Die gasseitige Rippe weist eine reduzierte Höhe auf. Entsprechend ist die Höhe der Wellenstruktur reduziert. Ferner kann die Scheibe eine durchgestanzte Struktur aufweisen, wobei zwei Scheiben ein Rohrbündel bilden.

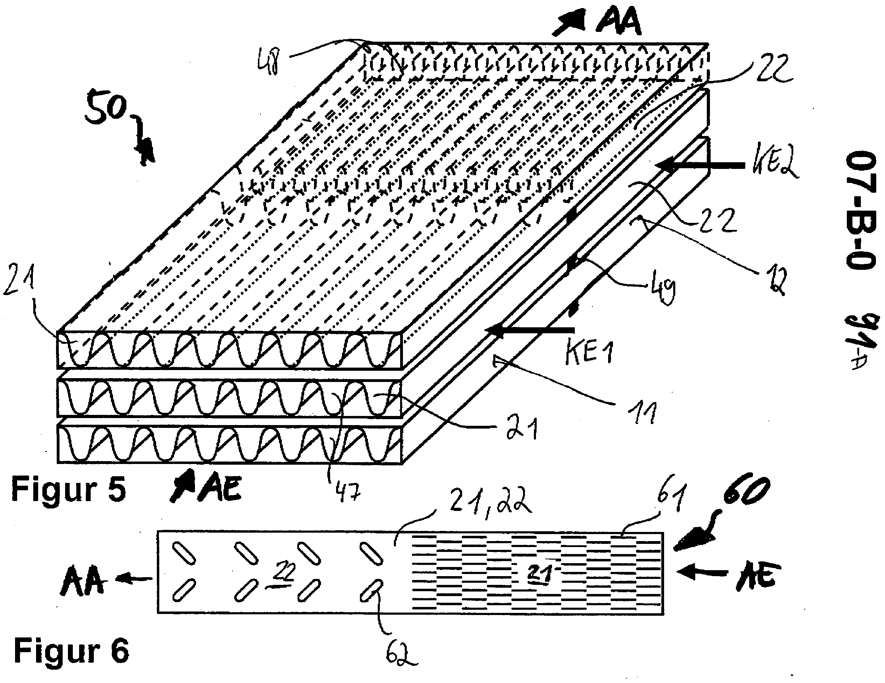

**Figur 5** zeigt durchgängige Strömungskanäle 50 mit zwei gewellten Turbulenzblechen 47, 48. Gleiche Merkmale sind mit den gleichen Bezugszeichen versehen wie in den vorherigen Figuren.

Die Rippendichte der zweiten Turbulenzbleche 48 ist größer als die der ersten Turbulenzbleche 47. Deshalb erfolgt in Abschnitt 11 kein Zusetzen und in Abschnitt 12 wird Wasser auskondensiert, das Ablagerungen wegspült. Eine Trennwand 49 trennt die beiden Kühlmedienkreisläufe voneinander.

**Figur 6** zeigt eine Schnittdarstellung eines durchgängigen Strömungskanals 60 mit einem eingeschoben Turbulenzblech 61 im ersten Teilwärmetauscher 11 und mit Dimpeln 62 in Form von Winglets im zweiten Teilwärmetauscher 12. Gleiche Merkmale sind mit den gleichen Bezugszeichen versehen wie in den vorherigen Figuren.

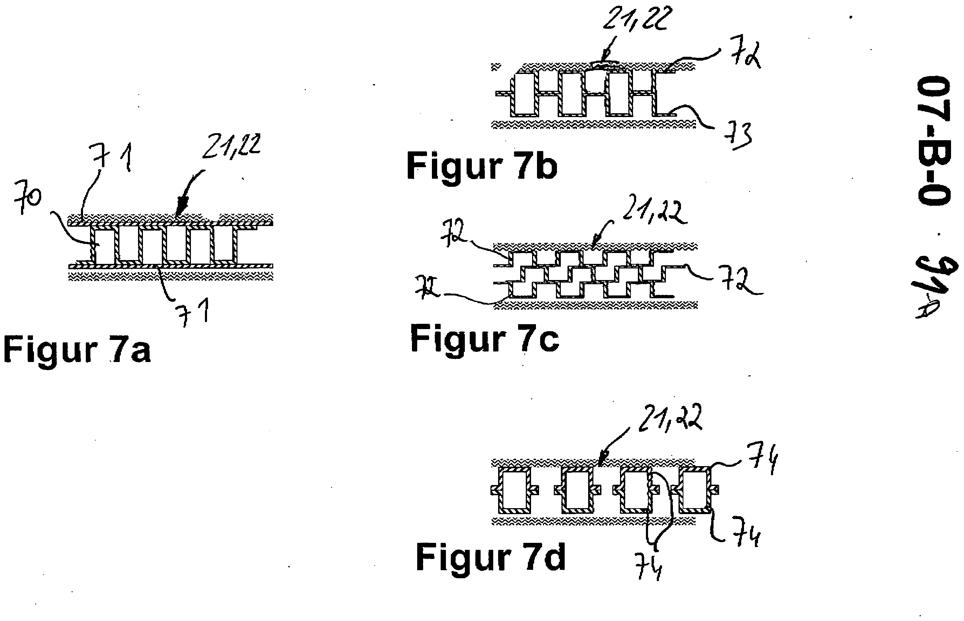

**Figuren 7a,b,c,d** zeigen weitere Ausführungsfomen von turbulenzerzeugenden Blechen. Gleiche Merkmale sind mit den gleichen Bezugszeichen versehen wie in den vorherigen Figuren.

Figur **7a** zeigt eine ebene Platte 71 mit einem Turbulenzblech 70. Figur 7b zeigt zwei verlötete gewellte Platten 72,73. Die Wellenstruktur kann auch gerundet sein. Figur 7c zeigt gewellte Platten mit dazwischen gelöteten Rippen. Die Wellenstruktur kann auch gerundet sein. Figur 7d zeigt Rohrbündel aus zwei gestanzten Platten 74.

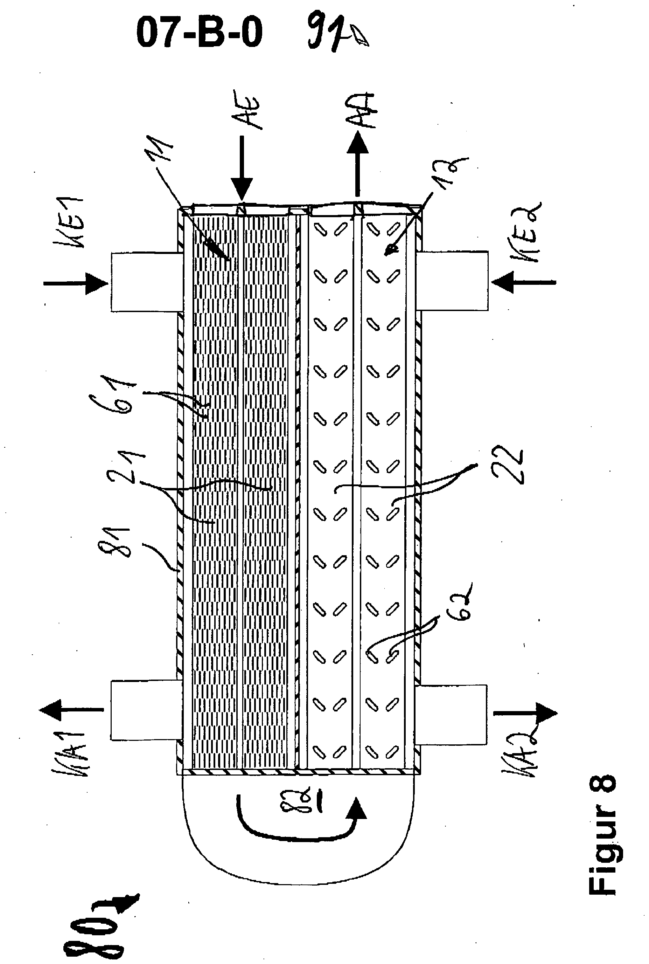

**Figur 8** zeigt einen zweistufigen Abgaswärmetauscher 80 im U-Flow . Gleiche Merkmale sind mit den gleichen Bezugszeichen versehen wie in den vorherigen Figuren.

Der Abgaskühler weist ein Gehäuse 81 und ein Umlenkelement 82 auf.

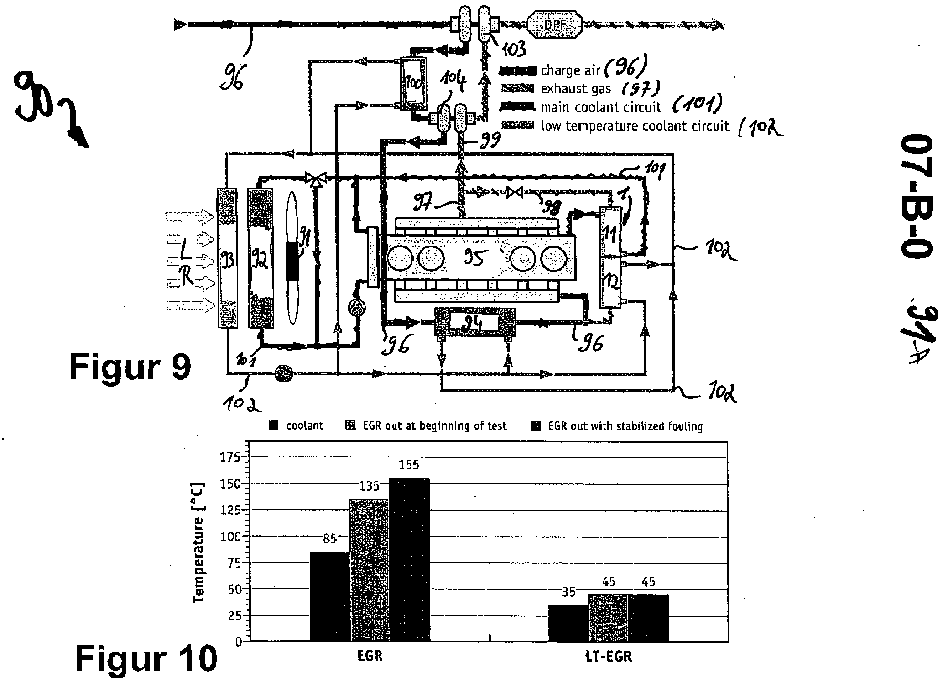

**Figur 9** zeigt ein System 90 mit einem zweistufigen Abgaskühler. Gleiche Merkmale sind mit den gleichen Bezugszeichen versehen wie in den vorherigen Figuren.

Das System 90 weist einen Turbolader 103 auf. Über die Ladeluftleitung 96 wird Ladeluft aus der Umgebung im Turbolader 103 verdichtet im ersten Ladeluftkühler 100 abgekühlt und in einem zweiten Turbolader 104 weiterverdichtet und im zweiten Ladeluftkühler, Hochdruckkühler, erneut abgekühlt und anschließend dem Motor 95 zugeführt.

Das im Motor 95 entstehende Abgas strömt durch die Leitung 97. Eine Leitung 99 führt einen Teils des Abgases über die Turbolader 104, 103 zum Auspuff, ein anderer Teil des Abgases wird in der Leitung 98 rückgeführt und zuvor in dem Wärmetauscher 1, in der ersten Stufe 11 und anschließend in der zweiten Stufe 12 gekühlt und der abgekühlten Ladeluft beigemischt. Der zweite Ladeluftkühler 94 und zweite Teilwärmetauscher 12 werden vom Niedertemperaturkreislauf 102 mit Kühlmittel versorgt, das in dem Niedertemperaturkühler 93 die vom Lüfter 91 angesaugte Luft kühlt. Zwischen Lüfter und 91 und Niedertemperaturkühler 93 ist der Kühlmittelkühler 92 angeordnet. Dieser führt dem Motor 95 sowie dem ersten Teilwärmetauscher 11 Kühlmittel zu. Luft strömt in Richtung LR durch den zweiten und dritten Wärmetauscher 92,93.

**Figur 10** zeigt ein Schaubild mit den Vorteilen der zweistufigen Abgaskühlung. Der Niedertemperaturkühler LT-EGR (zweiter Teilwärmetauscher 12) erreicht deutlich geringere Temperaturen und kaum Verschmutzung (Fouling).

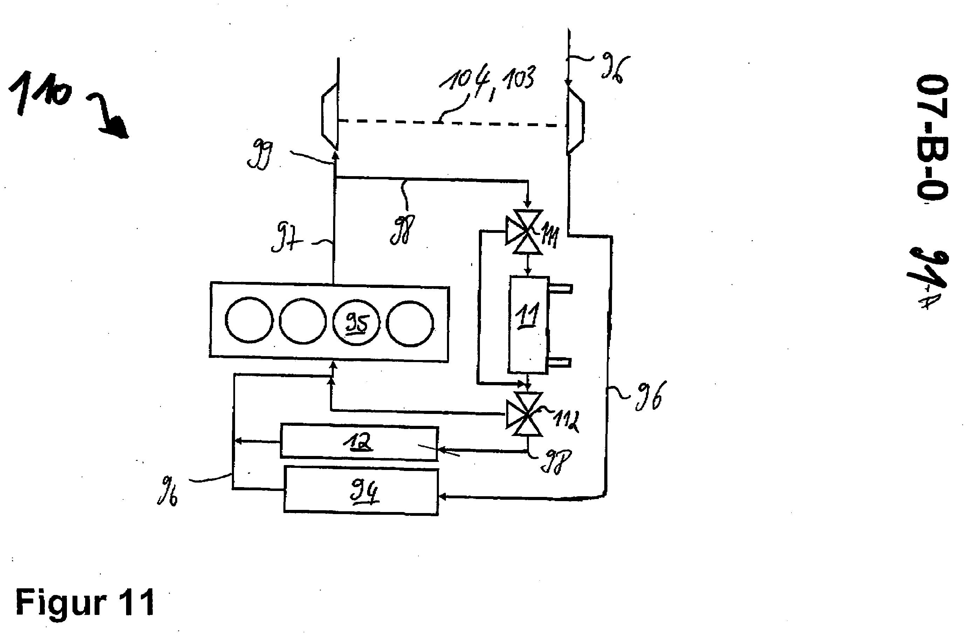

**Figur 11** zeigt ein weiteres System 110 mit einem ersten Regelorgan 111 zustromseitig des ersten Teilwärmetauschers 11 und einem zweiten Regelorgan 112 abstromseitig des ersten Teilwärmetauschers 11 und zustromseitig des zweiten Teilwärmetauschers 12. Gleiche Merkmale sind mit den gleichen Bezugszeichen versehen wie in den vorherigen Figuren.

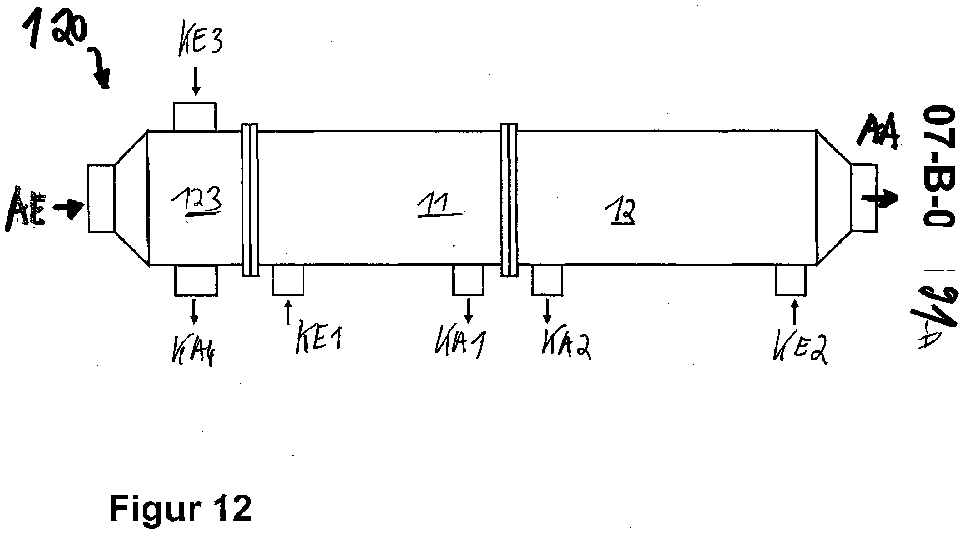

**Figur 12** zeigt einen dreistufigen Abgaskühler mit dem zusätzlichen dritten Teilwärmetauscher 123. Dieser reduziert die Thermowechelbelastungen der Abschnitte 11 und 12 und weist 1/4 bis 1/8 der Gesamtlänge des Wärmetauschers auf. Teil 123 ist im Gleichstrom- oder im Gegenstrom durchströmbar und kühlt das Abgas auf 300°C bis 400°C ab. Es herrscht ein hoher Kühlmitteldurchsatz und gasseitig besteht ein geringer Druckabfall aufgrund der geringen Rippenanzahl und der wenigen turbulenzerzeugenden Strukturen. Es werden glatte Rippen oder nur wenige Winglets eingebracht, so dass eine geringe Rippendichte herrscht. Ein dritter Kreislauf 133 mit einem Temperaturniveau oberhalb des Motorkühlmittels ist bsp Propylenglykol bei 160°C bis 200°C. Dadurch erfolgt bei entsprechender Anordnung des Rückkühlers eine Leistungssteigerung.

In Abschnitt 11 wird die meiste Wärme dem Abgas entzogen, es darf jedoch kein Zusetzen aufgrund von Verschmutzung erfolgen.

In Abschnitt 12 wird schließlich die Zieltemperatur erreicht. Das im Abgas enthaltene Wasser kondensiert und fördert so die Reinigung des Abschnitts 12.

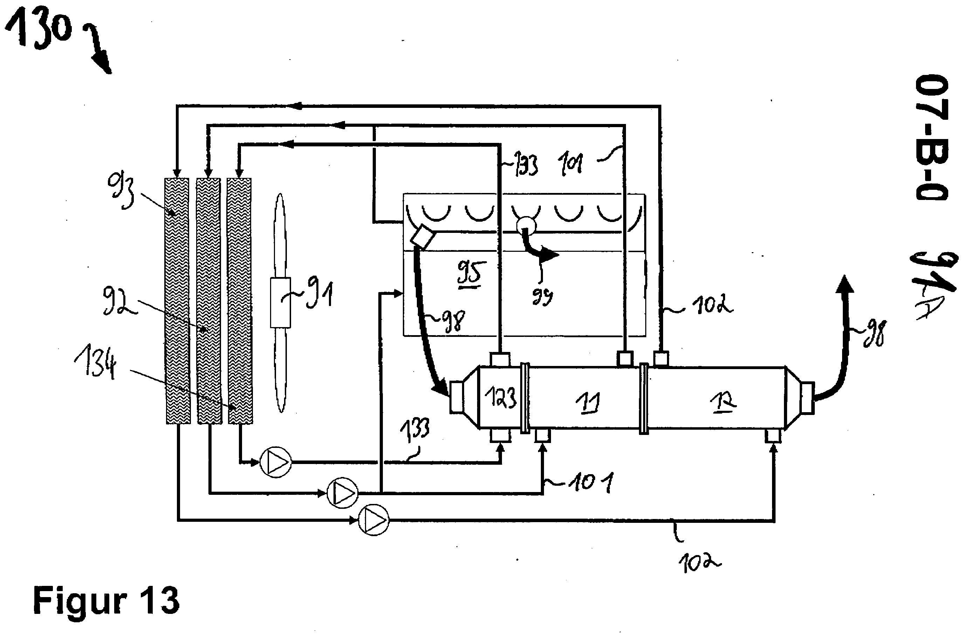

**Figur 13** zeigt ein erstes System 130 mit einem dreistufigen Abgaskühler. Gleiche Merkmale sind mit den gleichen Bezugszeichen versehen wie in den vorherigen Figuren. Im Vergleich zu Figur 9 ist ein vierter Wärmetauscher 134 vorgesehen.

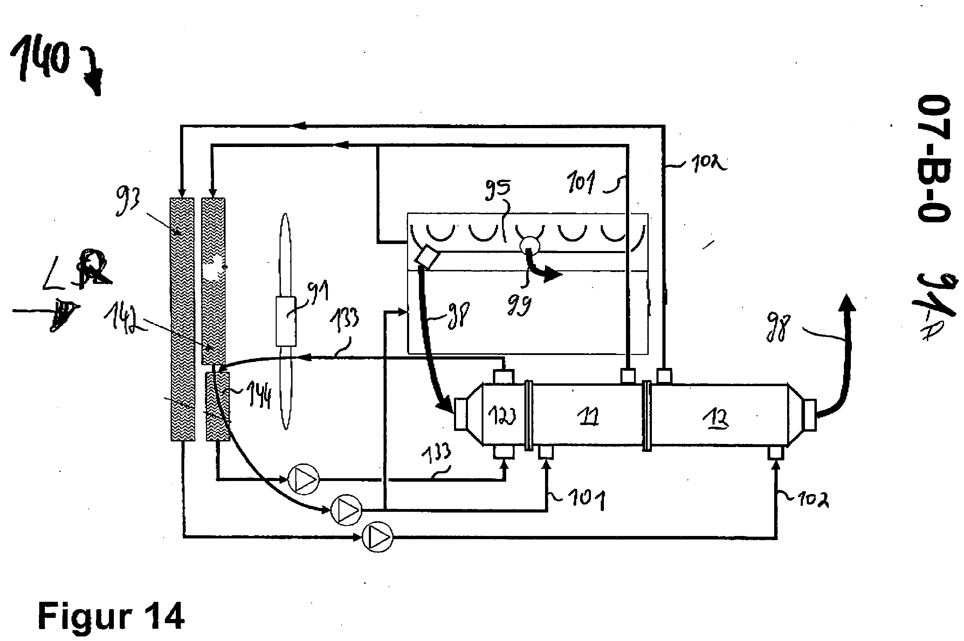

**Figur 14****:** zeigt ein zweites System 140 mit einem dreistufigen Abgaskühler. Gleiche Merkmale sind mit den gleichen Bezugszeichen versehen wie in den vorherigen Figuren. Der zweite Wärmetauscher 142 und der vierte Wärmetauscher 144 sind bezüglich der Richtung LR im Wesentlichen auf einer Höhe angeordnet.

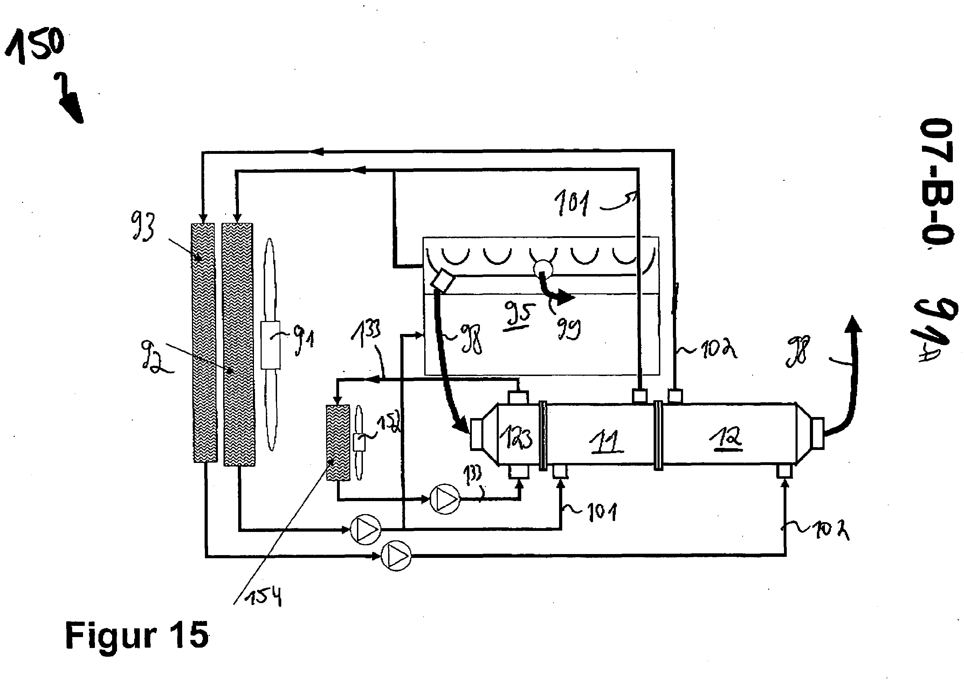

**Figur 15** zeigt ein drittes System 150 mit einem dreistufigen Abgaskühler. Gleiche Merkmale sind mit den gleichen Bezugszeichen versehen wie in den vorherigen Figuren. Hierbei ist für den vierten Wärmetauscher ein separater zweiter Lüfter 152 vorgesehen.

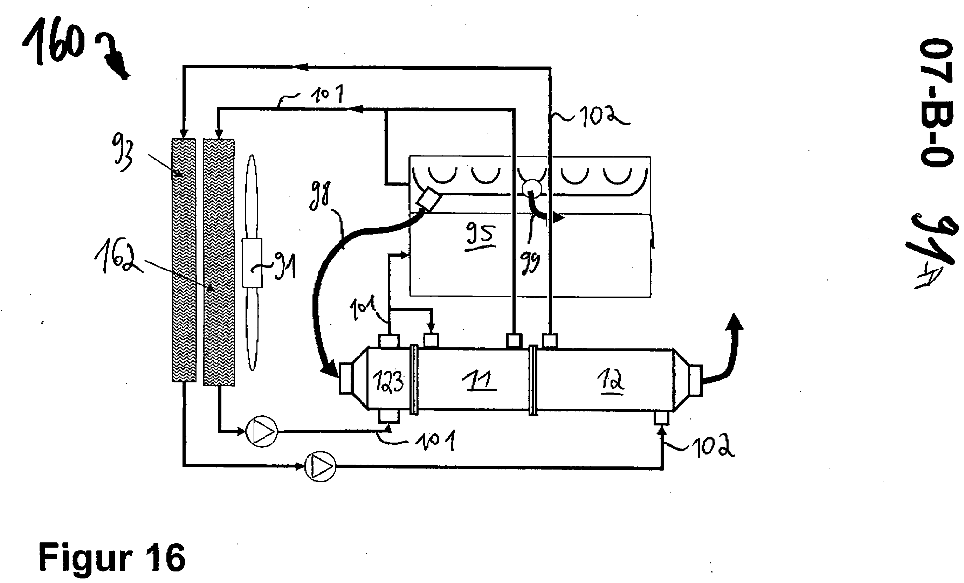

**Figur 16** zeigt ein viertes System 160 mit einem dreistufigen Abgaskühler. Gleiche Merkmale sind mit den gleichen Bezugszeichen versehen wie in den vorherigen Figuren. Hierbei sind der zweite Wärmetauscher und der vierte Wärmetauscher in einem einzigen Wärmetauscher realisiert 162.

## Patentansprüche

1. Wärmetauscher zur Abgaskühlung einer Brennkraftmaschine eines Kraftfahrzeugs aufweisend:
einen ersten Teilwärmetauscher (11) mit zumindest einem ersten Strömungskanal (21) zur Durchströmung mit einem zu kühlenden Medium und zumindest einen dritten Strömungskanal (41) zur Durchströmung mit einem ersten Kühlmedium,
zumindest einen zweiten Teilwärmetauscher (12) mit zumindest einem zweiten Strömungskanal (22) zur Durchströmung mit dem zu kühlenden Medium und zumindest einen vierten Strömungskanal (42) zur Durchströmung mit einem zweiten Kühlmedium,
wobei der zumindest eine erste Strömungskanal vor dem zumindest einen zweiten Strömungskanal in Strömungsrichtung des Abgases angeordnet ist,
wobei der zumindest eine erste Strömungskanal (21) und der zumindest eine zweite Strömungskanal (22) in Strömungsverbindung stehen und der zumindest eine erste Strömungskanal (21) und der zumindest eine zweite Strömungskanal (22) zumindest jeweils eine erste spezifische Wärmeübertragungsfläche (23) und zumindest jeweils eine zweite spezifische Wärmeübertragungsfläche (24) aufweisen, wobei die zweite spezifische Wärmeübertragungsfläche (24) dividiert durch die erste spezifische Wärmeübertragungsfläche (23) einen Quotienten (ψ) ergibt,
und der zumindest eine erste und der zumindest eine zweite Strömungskanal (21,22) rohrartig ausgebildet sind und eine erste Rohrinnenwandfläche aufweist, die die zumindest eine erste Wärmeübertragungsfläche (23) bildet und
der zumindest eine erste Strömungskanal (21) erste Turbulenzelemente (47) aufweist und der zumindest eine zweite Strömungskanal (22) zweite Turbulenzelemente (48) aufweist jeweils als zweite spezifische Wärmeübertragungsflächen, **dadurch gekennzeichnet dass** der zumindest eine erste Strömungskanal (21) einen größeren Quotienten (ψ) aufweist als der zumindest eine zweite Strömungskanal (22),
wobei der Quotient (ψ) des zumindest einen ersten Strömungskanals (21) Werte von 1,0 bis 2,5 und der Quotient (ψ) des zumindest einen zweiten Strömungskanals (22) Werte von 0 bis 1,5 annimmt.

2. Wärmetauscher nach Anspruch 1, **dadurch gekennzeichnet, dass** der zumindest eine erste Strömungskanal (21) und der zumindest eine zweite Strömungskanal (22) eine Baueinheit bilden.

3. Wärmetauscher nach einem der vorhergehenden Ansprüche, **dadurch gekennzeichnet, dass** das erste Kühlmedium eine höhere Temperatur aufweist als das zweite Kühlmedium.

4. Wärmetauscher nach einem der vorhergehenden Ansprüche, **dadurch gekennzeichnet, dass** die ersten Turbulenzelemente (47) eine erste Turbulenzelementhöhe und/oder die zweiten Turbulenzelemente (48) eine zweite Turbulenzelementhöhe aufweisen.

5. Wärmetauscher nach einem der vorhergehenden Ansprüche, **dadurch gekennzeichnet, dass** die ersten Turbulenzelemente (47) erste Dimpel (62) oder erste Turbulenzbleche (61, 70, 71, 72, 73, 74) mit ersten Rippensegmenten und/oder die zweiten Turbulenzelemente (48) zweite Dimpel (61) oder zweite Turbulenzbleche (61, 70, 71, 72, 73, 74) mit zweiten Rippensegmenten sind.

6. Wärmetauscher nach einem der vorhergehenden Ansprüche, **dadurch gekennzeichnet, dass** die ersten Turbulenzbleche (61, 70, 71, 72, 73, 74) und/oder die zweiten Turbulenzbleche (61, 70, 71, 72, 73, 74) die zumindest eine zweite Wärmeübertragungsfläche (24) aufweisen.

7. Wärmetauscher nach einem der vorhergehenden Ansprüche, **dadurch gekennzeichnet, dass** die ersten Turbulenzelemente (47) eine erste Turbulenzelementhöhe und/oder die zweiten Turbulenzelemente (48) eine zweite Turbulenzelementhöhe aufweisen.

8. Wärmetauscher nach einem der vorhergehenden Ansprüche, **dadurch gekennzeichnet, dass** die erste Turbulenzelementhöhe größer ist als die zweite Turbulenzelementhöhe.

9. Wärmetauscher nach einem der vorhergehenden Ansprüche, **dadurch gekennzeichnet, dass** eine erste Turbulenzelementdichte durch die Anzahl der ersten Turbulenzelemente (47) bezogen auf eine erste Länge des zumindest einen ersten Strömungskanals (21) und/oder eine zweite Turbulenzelementdichte durch die Anzahl der zweiten Turbulenzelemente (48) bezogen auf eine zweite Länge zumindest einen zweiten Strömungskanals (22) definiert ist.

10. Wärmetauscher nach einem der vorhergehenden Ansprüche, **dadurch gekennzeichnet, dass** eine erste Turbulenzelementdicke größer als eine zweite Turbulenzelementdicke ist.

11. Wärmetauscher nach einem der Ansprüche 1 bis 10, **dadurch gekennzeichnet, dass** eine erste Turbulenzelementdicke kleiner als eine zweite Turbulenzelementdicke ist.

12. Wärmetauscher nach einem der vorhergehenden Ansprüche, **dadurch gekennzeichnet, dass** der Wärmetauscher ein U-Flow-Wärmetauscher (80) ist.

13. Wärmetauscher nach einem der Ansprüche 1 bis 12, **dadurch gekennzeichnet, dass** der Wärmetauscher ein I-Flow-Wärmetauscher (1) ist.

14. Wärmetauscher nach einem der vorhergehenden Ansprüche, **dadurch gekennzeichnet, dass** der Wärmetauscher einen dritten Teilwärmetauscher (123) zum Abbau von Thermospannungen aufweist.

15. Wärmetauscher nach Anspruch 14, **dadurch gekennzeichnet, dass** der dritte Teilwärmetauscher (123) 1/8 bis 1/4 einer Wärmetauscherlänge des Wärmetauschers bildet.

16. Wärmetauscher nach einem der Ansprüche 14 oder 15, **dadurch gekennzeichnet, dass** der erste Teilwärmetauscher (11) zwischen dem zweiten Teilwärmetauscher (12) und dem dritten Teilwärmetauscher (123) angeordnet ist.

17. Wärmetauscher nach einem der Ansprüche 14 bis 16, **dadurch gekennzeichnet, dass** der erste Teilwärmetauscher (11) und/oder der zweite Teilwärmetauscher (12) und/oder dritte Teilwärmetauscher (123) eine Baueinheit bilden.

18. Wärmetauscher nach einem der Ansprüche 14 bis 17, **dadurch gekennzeichnet, dass** in dem ersten Teilwärmetauscher (11) und/oder in dem zweiten Teilwärmetauscher (12) und/oder in dem dritten Teilwärmetauscher (123) das zu kühlende Medium und das Kühlmedium im Gleichstrom oder im Gegenstrom strömen.

19. Verfahren zum Betreiben des Wärmetauschers (1, 80, 120) nach einem der Ansprüche 1 bis 18, **dadurch gekennzeichnet, dass** das zu kühlende Medium, insbesondere Abgas, beim Durchströmen des zweiten Wärmetauscherteils (12) zumindest Wasser aus dem zu kühlenden Medium, insbesondere dem Abgas, auskondensiert zum Reinigen des zweiten Strömungskanals (22) von Ablagerung des zu kühlenden Mediums.

20. Verfahren nach Anspruch 19, **dadurch gekennzeichnet, dass** das zu kühlende Medium im Wesentlichen bei einer Temperatur des zweiten Kühlmediums von kleiner als 40°C zumindest Wasser auskondensiert.

21. System mit zumindest einem Wärmetauscher (1, 80, 120) nach einem der Ansprüche 1 bis 18 aufweisend
- zumindest einen zweiten Wärmetauscher (92, 142, 152) zur Kühlung eines Verbrennungsmotors eines Kraftfahrzeugs
- zumindest einen dritten Wärmetauscher (93,133) zur Kühlung eines zweiten Kühlmediums.

22. System nach Anspruch 21, **dadurch gekennzeichnet, dass** zumindest ein vierter Wärmetauscher (134, 144, 154) zur Kühlung des ersten Kühlmediums vorgesehen ist.

23. System nach Anspruch 21 oder 22, **dadurch gekennzeichnet, dass** in einer Luftströmungsrichtung gesehen zunächst der dritte Wärmetauscher (93) und anschließend der zweite Wärmetauscher (92) angeordnet sind.

24. System nach einem der Ansprüche 21 bis 23, **dadurch gekennzeichnet, dass** in Luftströmungsrichtung gesehen nach dem zweiten Wärmetauscher (92) der vierte Wärmetauscher (134) angeordnet ist.

25. System nach einem der Ansprüche 21 bis 24, **dadurch gekennzeichnet, dass** der vierte Wärmetauscher (144) benachbart zu dem zweiten Wärmetauscher (142) und/oder im Wesentlichen auf derselben Höhe in Luftströmungsrichtung (LR) gesehen wie der zweite Wärmetauscher (142) angeordnet ist.

26. System nach einem der Ansprüche 21 bis 25, **dadurch gekennzeichnet, dass** der zweite Wärmetauscher und der vierte Wärmetauscher identisch sind.

27. System nach einem der Ansprüche 21 bis 26, **dadurch gekennzeichnet, dass** zustromseitig des ersten Wärmetauschers ein erstes Regelorgan (111) zur Regelung des Massenstroms des zu kühlenden Mediums und/oder zum Bypassen von zu kühlendem Medium um zumindest einen Teilwärmetauscher (11,12,123) angeordnet ist.

28. System nach einem der Ansprüche 21 bis 27, **dadurch gekennzeichnet, dass** abstromseitig des ersten Teilwärmetauschers (11) und zustromseitig des zweiten Teilwärmetauschers (12) ein zweites Regelorgan (112) zur Regelung des Massenstroms des zu kühlenden Mediums und/oder zum Bypassen von zu kühlendem Medium um zumindest einen Teilwärmetauscher (11,12) angeordnet ist.

## Claims

1. A heat exchanger for cooling the exhaust gas of an internal combustion engine of a motor vehicle, having:
a first partial heat exchanger (11) with at least one first flow channel (21) through which a medium to be cooled is to flow and at least one third flow channel (41) through which a first coolant is to flow,
at least one second partial heat exchanger (12) with at least one second flow channel (22) through which the medium to be cooled is to flow and at least one fourth flow channel (42) through which a second coolant is to flow, wherein the at least one first flow channel is arranged upstream of the at least one second flow channel in the flow direction of the exhaust gas, wherein the at least one first flow channel (21) and the at least one second flow channel (22) are fluidly connected and the at least one first flow channel (21) and the at least one second flow channel (22) have at least one respective first specific heat transfer surface (23) and at least one respective second specific heat transfer surface (24), wherein the second specific heat transfer surface (24), divided by the first specific heat transfer surface (23), yields a quotient (ψ),
and the at least one first and the at least one second flow channel (21, 22) are tubular and has a first tube interior surface that forms the at least one first heat transfer surface (23) and the at least one first flow channel (21) has first turbulence elements (47) and the at least one second flow channel (22) has second turbulence elements (48), respectively as second specific heat transfer surfaces, **characterised in that** the at least one first flow channel (21) has a larger quotient (ψ) than the at least one second flow channel (22), wherein the quotient (ψ) of the at least one first flow channel (21) has values of 1.0 to 2.5 and the quotient (ψ) of the at least one second flow channel (22) has values of 0 to 1.5.

2. The heat exchanger according to claim 1, **characterised in that** the at least one first flow channel (21) and the at least one second flow channel (22) form a constructive unit.

3. The heat exchanger according to one of the preceding claims, **characterised in that** the first coolant has a higher temperature than the second coolant.

4. The heat exchanger according to one of the preceding claims, **characterised in that** the first turbulence elements (47) have a first turbulence element height and/or the second turbulence elements (48) have a second turbulence element height.

5. The heat exchanger according to one of the preceding claims, **characterised in that** the first turbulence elements (47) are first dimples (62) or first turbulence plates (61, 70, 71, 72, 73, 74) with first rib segments and/or the second turbulence elements (48) are second dimples (61) or second turbulence plates (61, 70, 71, 72, 73, 74) with second rib segments.

6. The heat exchanger according to one of the preceding claims, **characterised in that** the first turbulence plates (61, 70, 71, 72, 73, 74) and/or the second turbulence plates (61, 70, 71, 72, 73, 74) have the at least one second heat transfer surface (24).

7. The heat exchanger according to one of the preceding claims, **characterised in that** the first turbulence elements (47) have a first turbulence element height and/or the second turbulence elements (48) have a second turbulence element height.

8. The heat exchanger according to one of the preceding claims, **characterised in that** the first turbulence element height is greater than the second turbulence element height.

9. The heat exchanger according to one of the preceding claims, **characterised in that** a first turbulence element density is defined by the number of first turbulence elements (47) relative to a first length of the at least one first flow channel (21) and/or a second turbulence element density is defined by the number of second turbulence elements (48) relative to a second length of the at least one second flow channel (22).

10. The heat exchanger according to one of the preceding claims, **characterised in that** a first turbulence element thickness is greater than a second turbulence element thickness.

11. The heat exchanger according to one of claims 1 to 10, **characterised in that** a first turbulence element thickness is less than a second turbulence element thickness.

12. The heat exchanger according to one of the preceding claims, **characterised in that** the heat exchanger is a U-flow heat exchanger (80).

13. The heat exchanger according to one of claims 1 to 12, **characterised in that** the heat exchanger is an I-flow heat exchanger (1).

14. The heat exchanger according to one of the preceding claims, **characterised in that** the heat exchanger has a third partial heat exchanger (123) for reducing thermal stresses.

15. The heat exchanger according to claim 14, **characterised in that** the third partial heat exchanger (123) has 1/8 to 1/4 of a heat exchanger length of the heat exchanger.

16. The heat exchanger according to one of claims 14 or 15, **characterised in that** the first partial heat exchanger (11) is arranged between the second partial heat exchanger (12) and the third partial heat exchanger (123).

17. The heat exchanger according to one of claims 14 to 16, **characterised in that** the first partial heat exchanger (11) and/or second partial heat exchanger (12) and/or third partial heat exchanger (123) form a constructive unit.

18. The heat exchanger according to one of claims 14 to 17, **characterised in that** the medium to be cooled and the coolant flow with or against the current in the first partial heat exchanger (11) and/or in the second partial heat exchanger (12) and/or in the third partial heat exchanger (123).

19. A method for operating the heat exchanger (1, 80, 120) according to one of claims 1 to 18, **characterised in that** the medium to be cooled, in particular exhaust gas, while flowing through the second heat exchanger part (12), condenses at least water out of the medium to be cooled, in particular the exhaust gas, for cleaning the second flow channel (22) from depositions of the medium to be cooled.

20. The method according to claim 19, **characterised in that** the medium to be cooled condenses out at least water substantially at a temperature of the second coolant of less than 40° C.

21. A system with at least one heat exchanger (1, 80, 120) according to one of claims 1 to 18, having
- at least one second heat exchanger (92, 142, 152) for cooling an internal combustion engine of a motor vehicle
- at least one third heat exchanger (93, 133) for cooling a second coolant.

22. The system according to claim 21, **characterised in that** at least one fourth heat exchanger (134, 144, 154) for cooling the first coolant is provided.

23. The system according to claim 21 or 22, **characterised in that** the third heat exchanger (93) is arranged first, as viewed in the direction of the air flow, followed by the second heat exchanger (92).

24. The system according to one of claims 21 to 23, **characterised in that** the fourth heat exchanger (134) is arranged downstream of the second heat exchanger (92), as viewed in the direction of air flow.

25. The system according to one of claims 21 to 24, **characterised in that** the fourth heat exchanger (144) is arranged adjacent to the second heat exchanger (142) as viewed in the direction of air flow (LR) and/or substantially at the same height as the second heat exchanger (142).

26. The system according to one of claims 21 to 25, **characterised in that** the second heat exchanger and the fourth heat exchanger are identical.

27. The system according to one of claims 21 to 26, **characterised in that** a first control member (111) for regulating the mass flow of the medium to be cooled and/or for bypassing the medium to be cooled around at least one partial heat exchanger (11, 12, 123) is arranged on the inflow side of the first heat exchanger.

28. The system according to one of claims 21 to 27, **characterised in that** a second control member (112) for regulating the mass flow of the medium to be cooled and/or for bypassing medium to be cooled around at least one partial heat exchanger (11, 12) is arranged on the outflow side of the first partial heat exchanger (11) and on the inflow side of the second partial heat exchanger (12).

## Revendications

1. Echangeur de chaleur servant au refroidissement de gaz d'échappement d'un moteur à combustion interne d'un véhicule automobile, ledit échangeur de chaleur présentant :
un premier échangeur de chaleur partiel (11) comprenant au moins un premier conduit d'écoulement (21) servant à la circulation avec un milieu à refroidir et comprenant au moins un troisième conduit d'écoulement (41) servant à la circulation avec un premier milieu de refroidissement,
au moins un deuxième échangeur de chaleur partiel (12) comprenant au moins un deuxième conduit d'écoulement (22) servant à la circulation avec le milieu à refroidir et comprenant au moins un quatrième conduit d'écoulement (42) servant à la circulation avec un second milieu de refroidissement, où le premier conduit d'écoulement au moins au nombre de un est disposé, dans la direction d'écoulement des gaz d'échappement, en amont du deuxième conduit d'écoulement au moins au nombre de un,
où le premier conduit d'écoulement (21) au moins au nombre de un et le deuxième conduit d'écoulement (22) au moins au nombre de un sont en communication d'écoulement, et le premier conduit d'écoulement (21) au moins au nombre de un et le deuxième conduit d'écoulement (22) au moins au nombre de un présentent, respectivement, au moins une première surface de transmission de chaleur spécifique (23) et, respectivement, au moins une deuxième surface de transmission de chaleur spécifique (24),
où la deuxième surface de transmission de chaleur spécifique (24), divisée par la première surface de transmission de chaleur spécifique (23), donne un quotient (ψ),
et le premier conduit d'écoulement (21) au moins au nombre de un et le deuxième conduit d'écoulement (22) au moins au nombre de un sont configurés de façon tubulaire et présentent une première surface de paroi intérieure tubulaire qui forme la première surface de transmission de chaleur (23) au moins au nombre de un, et le premier conduit d'écoulement (21) au moins au nombre de un présente des premiers éléments (47) générant des turbulences, et le deuxième conduit d'écoulement (22) au moins au nombre de un présente des deuxièmes éléments (48) générant des turbulences, ces éléments générant des turbulences étant considérés à chaque fois comme des deuxièmes surfaces de transmission de chaleur spécifiques,
**caractérisé en ce que** le premier conduit d'écoulement (21) au moins au nombre de un présente un quotient (ψ) plus grand que celui du deuxième conduit d'écoulement (22) au moins au nombre de un,
où le quotient (ψ) du premier conduit d'écoulement (21) au moins au nombre de un prend des valeurs allant de 1,0 à 2,5, et le quotient (ψ) du deuxième conduit d'écoulement (22) au moins au nombre de un prend des valeurs allant de 0 à 1,5.

2. Echangeur de chaleur selon la revendication 1, **caractérisé en ce que** le premier conduit d'écoulement (21) au moins au nombre de un et le deuxième conduit d'écoulement (22) au moins au nombre de un forment un ensemble unitaire.

3. Echangeur de chaleur selon l'une des revendications précédentes, **caractérisé en ce que** le premier milieu de refroidissement présente une température plus élevée que celle du second milieu de refroidissement.

4. Echangeur de chaleur selon l'une quelconque des revendications précédentes, **caractérisé en ce que** les premiers éléments (47) générant des turbulences présentent une première hauteur des éléments générant des turbulences et / ou les deuxièmes éléments (48) générant des turbulences présentent une deuxième hauteur des éléments générant des turbulences.

5. Echangeur de chaleur selon l'une quelconque des revendications précédentes, **caractérisé en ce que** les premiers éléments (47) générant des turbulences sont des premières ondulations (62) ou des premières tôles (61, 70, 71, 72, 73, 74) générant des turbulences, lesdites premières tôles comprenant des premiers segments d'ailettes et / ou les deuxièmes éléments (48) générant des turbulences sont des deuxièmes ondulations (61) ou des deuxièmes tôles (61, 70, 71, 72, 73, 74) générant des turbulences, lesdites deuxièmes tôles comprenant des deuxièmes segments d'ailettes.

6. Echangeur de chaleur selon l'une quelconque des revendications précédentes, **caractérisé en ce que** les premières tôles (61, 70, 71, 72, 73, 74) générant des turbulences et / ou les deuxièmes tôles (61, 70, 71, 72, 73, 74) générant des turbulences présentent la deuxième surface de transmission de chaleur (24) au moins au nombre de un.

7. Echangeur de chaleur selon l'une quelconque des revendications précédentes, **caractérisé en ce que** les premiers éléments (47) générant des turbulences présentent une première hauteur des éléments générant des turbulences et / ou les deuxièmes éléments (48) générant des turbulences présentent une deuxième hauteur des éléments générant des turbulences.

8. Echangeur de chaleur selon l'une quelconque des revendications précédentes, **caractérisé en ce que** la première hauteur des éléments générant des turbulences est plus grande que la deuxième hauteur des éléments générant des turbulences.

9. Echangeur de chaleur selon l'une quelconque des revendications précédentes, **caractérisé en ce qu'**une première densité des éléments générant des turbulences est définie par le nombre des premiers éléments (47) générant des turbulences, par rapport à une première longueur du premier conduit d'écoulement (21) au moins au nombre de un et / ou une deuxième densité des éléments générant des turbulences est définie par le nombre des deuxièmes éléments (48) générant des turbulences, par rapport à une deuxième longueur du deuxième conduit d'écoulement (22) au moins au nombre de un.

10. Echangeur de chaleur selon l'une quelconque des revendications précédentes, **caractérisé en ce qu'**une première épaisseur des éléments générant des turbulences est supérieure à une deuxième épaisseur des éléments générant des turbulences.

11. Echangeur de chaleur selon l'une quelconque des revendications 1 à 10, **caractérisé en ce qu'**une première épaisseur des éléments générant des turbulences est inférieure à une deuxième épaisseur des éléments générant des turbulences.

12. Echangeur de chaleur selon l'une quelconque des revendications précédentes, **caractérisé en ce que** l'échangeur de chaleur est un échangeur de chaleur (80) à flux de circulation en U.

13. Echangeur de chaleur selon l'une quelconque des revendications 1 à 12, **caractérisé en ce que** l'échangeur de chaleur est un échangeur de chaleur (1) à flux de circulation en I.

14. Echangeur de chaleur selon l'une quelconque des revendications précédentes, **caractérisé en ce que** l'échangeur de chaleur présente un troisième échangeur de chaleur partiel (123) servant à la réduction de tensions thermoélectriques.

15. Echangeur de chaleur selon la revendication 14, **caractérisé en ce que** le troisième échangeur de chaleur partiel (123) forme entre 1/8^{ème} et 1/4 d'une longueur de l'échangeur de chaleur.

16. Echangeur de chaleur selon l'une des revendications 14 ou 15, **caractérisé en ce que** le premier échangeur de chaleur partiel (11) est disposé entre le deuxième échangeur de chaleur partiel (12) et le troisième échangeur de chaleur partiel (123).

17. Echangeur de chaleur selon l'une quelconque des revendications 14 à 16, **caractérisé en ce que** le premier échangeur de chaleur partiel (11) et / ou le deuxième échangeur de chaleur partiel (12) et / ou le troisième échangeur de chaleur partiel (123) forment un ensemble unitaire.

18. Echangeur de chaleur selon l'une quelconque des revendications 14 à 17, **caractérisé en ce que** le milieu à refroidir et le milieu de refroidissement s'écoulent, dans le premier échangeur de chaleur partiel (11) et / ou dans le deuxième échangeur de chaleur partiel (12) et / ou dans le troisième échangeur de chaleur partiel (123), suivant un flux circulant dans le même sens ou suivant un flux circulant dans des sens opposés.

19. Procédé pour le fonctionnement de l'échangeur de chaleur (1, 80, 120) selon l'une quelconque des revendications 1 à 18, **caractérisé en ce que** le milieu à refroidir, en particulier des gaz d'échappement, au cours de la circulation à travers le deuxième échangeur de chaleur partiel (12), au moins de l'eau provenant du milieu à refroidir, provenant en particulier des gaz d'échappement, se condense pour nettoyer le deuxième conduit d'écoulement (22), d'un dépôt formé par le milieu à refroidir.

20. Procédé selon la revendication 19, **caractérisé en ce que** le milieu à refroidir, essentiellement à une température du second milieu de refroidissement inférieure à 40°C, condense au moins de l'eau.

21. Système comprenant au moins un échangeur de chaleur (1, 80, 120) selon l'une quelconque des revendications 1 à 18, ledit système présentant :
- au moins un deuxième échangeur de chaleur (92, 142, 152) servant au refroidissement d'un moteur à combustion interne d'un véhicule automobile,
- au moins un troisième échangeur de chaleur (93, 133) servant au refroidissement d'un second milieu de refroidissement.

22. Système selon la revendication 21, **caractérisé en ce qu'**il est prévu au moins un quatrième échangeur de chaleur (134, 144, 154) servant au refroidissement du premier milieu de refroidissement.

23. Système selon la revendication 21 ou 22, **caractérisé en ce que**, vus dans une direction d'écoulement de l'air, sont disposés d'abord le troisième échangeur de chaleur (93) puis le deuxième échangeur de chaleur (92).

24. Système selon l'une quelconque des revendications 21 à 23, **caractérisé en ce que**, vu dans la direction d'écoulement de l'air, le quatrième échangeur de chaleur (134) est disposé en aval du deuxième échangeur de chaleur (92).

25. Système selon l'une quelconque des revendications 21 à 24, **caractérisé en ce que** le quatrième échangeur de chaleur (144) est disposé en étant contigu au deuxième échangeur de chaleur (142) et / ou, vu dans la direction d'écoulement de l'air (LR), est disposé pratiquement à la même hauteur que le deuxième échangeur de chaleur (142).

26. Système selon l'une quelconque des revendications 21 à 25, **caractérisé en ce que** le deuxième échangeur de chaleur et le quatrième échangeur de chaleur sont identiques.

27. Système selon l'une quelconque des revendications 21 à 26, **caractérisé en ce qu'**un premier organe de régulation (111) servant à la régulation du flux massique du milieu à refroidir et / ou servant à la dérivation du milieu à refroidir autour d'au moins un échangeur de chaleur partiel (11, 12, 123) est disposé sur le côté flux entrant du premier échangeur de chaleur.

28. Système selon l'une quelconque des revendications 21 à 27, **caractérisé en ce qu'**un deuxième organe de régulation (112) servant à la régulation du flux massique du milieu à refroidir et / ou servant à la dérivation du milieu à refroidir autour d'au moins un échangeur de chaleur partiel (11, 12) est disposé sur le côté flux sortant du premier échangeur de chaleur partiel (11) et sur le côté flux entrant du deuxième échangeur de chaleur partiel (12).
